# EUROPEAN PATENT APPLICATION

(11) **EP 4 434 828 A1**
(43) Date of publication of application: **25.09.2024**
(21) Application number: 23164047.5
(22) Date of filing: 24.03.2023
(51) Int. Cl.: B60T 13/26, B60T 17/00, B60T 15/48

(54) **SEMI-OPEN VEHICLE PNEUMATIC SYSTEM**

(71) Applicant: ZF CV Systems Europe BV, 1170 Brüssel (BE)
(72) Inventor: KALISZUK, Michal, 42-400 Zawiercie (PL)
(74) Representative: Rabe, Dirk-Heinrich

(57) **Abstract**

The invention relates to a recuperative vehicle pneumatic system, the system (1) comprising a compressed air supply unit (3), at least one pneumatic valve (7) having a supply port (29) for receiving compressed air at supply pressure (pS), a working port (25), an exhaust section (41), and a control element (35), and a functional exhaust device (43) connected to the exhaust section (41) of the pneumatic valve (7) for discharging pressurized air from the exhaust section (41) to the environment. The recuperative pneumatic system (1) is a semi-open system further comprising a recuperation tank (9) connected to the air supply unit (3) and a recuperation conduit (45) connecting the exhaust section (41) of the pneumatic valve (7) to the recuperation tank (9). The invention further relates to a vehicle comprising such a recuperative vehicle pneumatic system (1) and to a pneumatic valve (7).

## Description

The invention relates to a recuperative vehicle pneumatic system. The system comprises a compressed air supply unit having a compressor configured to suck in air at a suction side and to provide air at a supply pressure at a pressure side. The system further comprises at least one pneumatic valve having a supply port for receiving compressed air at the supply pressure, a working port, an exhaust section, and a control element movable between a working position for providing air at a working pressure to the working port and an exhaust position for discharging pressurized air from the working port to the exhaust section. Moreover, the recuperative vehicle pneumatic system comprises a functional exhaust device connected to the exhaust section of the pneumatic valve for discharging pressurized air from the exhaust section to the environment.

With the ongoing shift in vehicle powertrains from internal combustion engines to hybrid and electric drives, the operating noise of auxiliary units and system equipment is becoming more and more relevant, as vehicle occupants, passengers and passers-by perceive the noise provided by these elements as unpleasant. In vehicle pneumatic systems, the relevant noise sources include not only the operating noise of a compressor providing compressed air but also the noise generated when compressed air is released from pneumatic elements. Besides air brakes, such pneumatic elements may, for example, drive passenger doors of city buses or the like. Vehicle manufacturers and their customers therefore have a strong interest in reducing the noise when pneumatic elements of the vehicle are vented. Furthermore, due to climate chance and increased energy costs, efficiency of vehicle pneumatic systems becomes more and more important. It is thus beneficial to recuperate compressed air after use. However, recuperation should not negatively affect dynamic response of the pneumatic system, in particular not a time needed to deaer or vent pneumatic elements.

WO 2020/164963 A1 discloses a compressed-air braking system for a motor vehicle, which braking system comprises a compressed-air supply unit having a compressor and a plurality of brake circuits connected via a multiple-circuit protection valve to the compressed-air supply unit. The brake circuits comprise at least one parking brake circuit with parking brake cylinders. To reduce the operating noises of the compressed-air braking system, particularly those occurring on venting of the parking brake cylinders, the parking brake cylinders on each wheel or on each vehicle axle can each be vented via a rapid-bleeder valve connected to a connecting line and a changeover valve arranged downstream thereof alternatively either into the ambient atmosphere or into an additional reservoir. While this system reduces noise, there is still room for improvement with regard to system complexity, efficiency and noise reduction.

It is therefore an object of the present invention to provide a recuperative vehicle pneumatic system having a reduced complexity, reduced operating noise and/or improved energetic efficiency preferably without negatively affecting dynamic response of the system.

According to a first aspect, the present invention solves this problem with a recuperative vehicle pneumatic system according to claim 1. The recuperative vehicle pneumatic system of the aforementioned type is characterized in that it is a semi-open system further comprising a recuperation tank preferably connected to the suction side of the compressor and a recuperation conduit connecting the exhaust section of the pneumatic valve to the recuperation tank. While it is preferable, the invention is not limited to pneumatic systems in which the recuperation tank is connected to the suction side of the compressor. The recuperation tank may also be connected to an air dryer of the system and/or another device, requiring pressurized air, in particular low-pressure compressed air. For example, the recuperated air may be used to regenerate an air dryer of the pneumatic system. Preferably, the recuperation tank is connected to multiple devices, for example the compressor and an air dryer. The invention is based on the idea that recuperation of pressurized air increases energetic efficiency and reduces generated noise while a semi-open system can maintain dynamic responsiveness of the system. Since the recuperated air is at a pressure level above the atmospheric pressure, the compressor of the compressed air supply generally needs less energy to bring recuperated air back to supply pressure compared to the use of unpressurized air drawn from the environment. Moreover, noise may be reduced when less or no air is released to the environment.

The pneumatic valve is a functional pneumatic element of the vehicle pneumatic system. Preferably, the pneumatic valve is a brake valve or a pneumatic valve of a pneumatic door. The pneumatic valve receives compressed air at the supply pressure form the compressed air supply and provides compressed air at a working pressure to the working port, when the control element of the pneumatic valve is in the working position. For example, the working port may be connected to a brake cylinder or a piston for driving a door. The control element of the pneumatic valve is configured to be moved to an exhaust position. When the control element is in this exhaust position, pressurized or compressed air may be discharged from the working port (or an element connected thereto), to an exhaust section of the pneumatic valve. The functional exhaust device is connected to the exhaust section of the pneumatic valve. The functional exhaust device can be part of the pneumatic valve or a separate element connected to the pneumatic valve (directly or via an adapter piece / connector). The functional exhaust device receives the compressed air to be discharged and directs it to the environment. Preferably, the functional exhaust device is or comprises an exhaust silencer and/or is or comprises a pipe, tube or other conduit for directing the compressed air received from the working port via the exhaust section towards the environment. For example and preferably, the functional exhaust device may comprise an exhaust-snorkel that prevents ingress of water when the vehicle comprising the recuperative vehicle pneumatic system drives through water.

A semi-open system is a combination of an open system and a closed or closed loop system. In an open system, compressed air is vented to the environment after its use in a pneumatic element, such as a pneumatic brake cylinder. In a closed system, the pressure fluid is redirected to a pressure fluid tank for reuse in another cycle. A hydraulic brake system of a car is a typical example of a closed system. Pressurized brake fluid is transferred into a brake cylinder for braking the car and then recycled to a tank for use during a subsequent brake operation. A semi-open system may be open to the environment and connected to the recuperation tank at the same time. Generally, a fluid connection to the recuperation tank as well as the environment is possible. Whether pressurized air flows towards the environment and/or the recuperation tank thus depends on the environmental pressure and the pressure level in the recuperation tank. Moreover, the direction of the airflow depends on the pressure loss or pressure drop generated between the pneumatic valve and the environment or the recuperation tank respectively. In the semi-open vehicle pneumatic system of the invention, pressurized air may flow to the recuperation tank via the recuperation conduit and/or to the environment via the functional exhaust device. Which way the air flows depends on the pressure gradient between the exhaust section on the one hand and the environment and the recuperation tank respectively on the other hand. For example, a snorkel for directing the compressed air to the environment may create a larger pressure drop (i.e. provide a larger resistance to the air flow) than the recuperation conduit and any elements contained therein, such that most of the compressed air to be released flows from the exhaust section towards the recuperation tank. The invention is based on the idea, that typical functional exhaust devices used for discharging air from the exhaust section to the environment produce a significant pressure drop. For example, a back pressure generated in the exhaust section may have a pressure level of 6 bar or larger. This back pressure is utilized to direct the pressurized air towards the recuperation tank without the need to lock of or close the flow path to the environment. System complexity is significantly reduced, since no switch valve is required for switching from an open system to a closed loop system. Thereby manufacturing, assembly and/or maintenance cost may be reduced significantly while increasing energetic efficiency and/or reducing generated noise. By applying the semi-open system, adverse effects on the dynamic response of the system can be prevented.

It shall be noted, that a system having a switch valve configured to switch between a flow path to the environment and a second flow path leading to a recuperation tank is not a semi-open system according to the present invention. A semi-open system that may shortly achieve a semi-open state during the switching of a valve is not a semi-open system according to the present disclosure. It shall however be understood, that in the semi-open recuperative vehicle pneumatic system according to the present invention the recuperation tank and the environment need not be in fluid connection to the exhaust section at all times. For example, a check valve may be arranged in the recuperation conduit that only opens when a certain pressure level is reached in the exhaust section of the pneumatic valve.

Preferably, the above problem is solved by a recuperative vehicle pneumatic system, the system comprising a compressed air supply unit having a compressor configured to suck in air at a suction side and to provide air at a supply pressure at a pressure side, at least one pneumatic element having an inlet port for receiving compressed air and an exhaust section for discharging pressurized air, a functional exhaust device connected to the exhaust section for discharging pressurized air from the exhaust section to the environment, characterized in that the recuperative pneumatic system is a semi-open system further comprising a recuperation tank, that is preferably connected to the suction side of the compressor, and a recuperation conduit connecting the exhaust section of the pneumatic element to the recuperation tank. The recuperation tank may also be connected to an air dryer or a low-pressure device or consumer. For example, the recuperated air may be used to regenerate an air dryer of the pneumatic system. The pneumatic element may be or comprise an above-described pneumatic valve. The pneumatic element may also be another device utilizing pressurized or compressed air respectively. For example, the pneumatic element can include or be part of a cooling system.

According to a first preferred embodiment, the recuperative pneumatic system is configured such that the exhaust section of the pneumatic valve is in fluid connection to the recuperation tank as well as the environment via the functional exhaust device when a back pressure in the exhaust section is larger or equal to a recuperative pressure in the recuperation tank. The back pressure in the exhaust section is the pressure level prevailing in the exhaust section of the pneumatic valve when compressed air is discharged from the working port to the exhaust section. The back pressure is strongly dependent on the pressure drop generated by the functional exhaust device. The pressure drop is the difference in total pressure (dynamic pressure plus static pressure) between two points of a fluid carrying network. If the functional exhaust device provides a high resistance to air flow from the exhaust section to the environment (i.e. causes a high pressure drop), the back pressure in the exhaust section is high. Vice versa, the back pressure in the exhaust section is low, if the functional exhaust device provides a low resistance to airflow (i.e. causes a low pressure drop). According to the preferred embodiment, a fluid connection to the recuperation tank is only established when the back pressure in the exhaust device is larger or equal to a recuperative pressure in the recuperation tank. Thus, back flow of air from the recuperation tank to the exhaust section may be prevented. For example, a fluid connection between the exhaust section and the recuperation tank is established (i.e. the recuperation conduit is open), if the back pressure has a value of 6 bar while a recuperative pressure in the recuperation tank is 4 bar. On the other hand, no flow of air is possible between the recuperation tank and the exhaust section (the recuperation conduit is closed or blocked), if for example the recuperative pressure is 4 bar while the back pressure is 2 bar. It shall be understood, that any pressure drop generated in the recuperation conduit or in additional elements comprised therein may be taken into account. Preferably, the system is configured such that the exhaust section of the pneumatic valve is in fluid connection to the recuperation tank as well as the environment via the functional exhaust device when the back pressure is larger or equal to the sum of the recuperative pressure and a recuperation pressure drop in the recuperation conduit. In the present disclosure a fluid connection is a connection that allows flow of air between the connected elements. A connection as such may allow such flow but may also be closed off or blocked. For example, two points connected by a pipe comprising a shut-off valve are generally connected but are only in fluid connection if the shut-off valve is open.

Preferably, a tank protection valve is arranged in the recuperation conduit, the tank protection valve being configured to prevent back flow of pressurized air from the recuperation tank to the exhaust section. The tank protection valve preferably is or comprises a check-valve. Check-valves are generally simple, reliably, affordable and/or lightweight.

In a preferred embodiment, the pneumatic valve is a relay valve having a control port for receiving control pressure and a relay piston forming the control element, wherein the relay piston is movable between the working position and the exhaust position dependent on the control pressure. The working pressure provided to the working port is preferably proportional, particularly preferred substantially identical, to the control pressure supplied to the control port of the relay valve. The relay valve comprises a relay piston movable between the working position and the exhaust position. Preferably, the relay piston is continuously movable between the exhaust position and a fully open position. The fully open position may be a working position of the relay valve. The relay piston may be received in a relay cylinder of the relay valve. The relay cylinder may actuate a relay valve member to open a fluid connection between the supply port and the working port.

In a further embodiment, the recuperative vehicle pneumatic system comprises a suction filter unit, wherein the suction filter unit connects the suction side of the compressor to an air inlet of the recuperative pneumatic system. The suction side of the compressor is the section of the compressor from which air is sucked into the compressor when the compressor is running. The pressure side is the outlet section of the compressor to which compressed air is supplied when the compressor is running. The suction side and the pressure side are functional sides and not physical sides. Therefore, the suction side and the pressure side may be arranged on the same physical face or side respectively of the compressor. According to the preferred embodiment, the suction side of the compressor is connected to the air inlet of the recuperative system as well as the recuperation tank. During operation, the compressor may thus suck in air from the environment via the suction filter unit and/or from the recuperation tank. The suction filter unit is adapted to prevent ingress of dust or other contaminations into the pneumatic system, in particular the compressor. The system can further comprise an air dryer for removing moisture.

Preferably, the recuperative pneumatic system further comprises an inlet protection valve arranged between the suction side and the air inlet, wherein the inlet protection valve prevents airflow from the recuperation tank to the air inlet. The inlet protection valve prevents loss of recuperated compressed air from the recuperation tank when the recuperative pressure in the recuperation tank exceeds a pressure drop generated by the inlet filter and/or other flow elements (e.g. the air dryer) arranged in the flow path between the recuperation tank and the air inlet. The inlet protection valve preferably is or comprises an inlet protection check-valve that allows airflow from the air inlet towards the suction side of the compressor and blocks airflow towards the air inlet of the system.

According to a preferred embodiment, the recuperative vehicle pneumatic system further comprises an intermediate protection valve arranged between the recuperation tank and the suction side of the compressor, wherein the intermediate protection valve prevents airflow from the suction side to the recuperation tank. Preferably, the intermediate protection valve is a check valve. The intermediate protection valve prevents airflow from or through the compressor back to the recuperation tank when the compressor is not running or running at low speeds. The intermediate protection valve may also prevent airflow from the air inlet towards the recuperation tank.

Preferably, a crack pressure of the inlet protection valve is smaller than a corresponding crack pressure of the intermediate protection check valve. The crack pressure describes the pressure difference between the two sides of a valve that needs to be surpassed before the valve opens. For example, a protection valve having a crack pressure of 1 bar opens once a pressure on the first (functional) side of the valve exceeds the pressure level on the opposite side by 1 bar or more. If in the same example the pressure difference is 0.5 bar, the crack pressure is not reached and the valve remains closed. By providing an inlet protection valve having a smaller crack pressure than a corresponding crack pressure of the intermediate protection check valve (i.e. the inlet protection valve opens at a lower pressure difference), it may be ensured that the compressor sucks in air via the air inlet instead of the exhaust conduit when a pressure level in the recuperation tank lies below a pressure threshold. For example, if the recuperation reservoir is empty and at atmospheric pressure, the compressor sucks in air via the air inlet instead of the recuperation conduit. It is thus ensured that the compressor sucks in filtered air. Preferably the crack pressure of the intermediate protection valve exceeds the crack pressure of the inlet protection valve by 0.05 bar or more, 0.1 bar or more, 0.15 bar or more, 0.2 bar or more, 0.25 bar or more, 0.3 bar or more.

In a particularly preferred embodiment of the recuperative vehicle pneumatic system, the inlet protection valve and the intermediate protection check valve are formed as a double-acting check valve. The double-acting check valve either connects the recuperation tank or the air inlet to the suction side of the compressor. Use of the double-acting check valve allows for a compact design and prevents that both passages providing air to the suction side of the compressor are open at the same time.

Preferably, the functional exhaust device comprises an exhaust silencer. The exhaust silencer may be directly mounted to the exhaust section of the pneumatic valve. Preferably, the exhaust silencer comprises a silencer basket and a damping material held in the silencer basket. It shall be noted that the exhaust silencer must not comprise a silencer basket. The silencer basket may be fixed to the exhaust section of the pneumatic valve. The exhaust silencer can be connected to the pneumatic valve via threads, screws, a snap fit, an adapter piece, glue or other suitable ways.

In a preferred further development, the recuperation conduit extends through the exhaust silencer. The recuperation conduit can comprise a pipe extending through the exhaust silencer, preferably through the damping material of the exhaust silencer. Extending the recuperation conduit through the exhaust silencer, allows the use of regular pneumatic valves. Through this, modifications on the pneumatic valve may be prevented and a semi-open system may be achieved at low cost. For example and preferably, the recuperation conduit extends through a whole provided in a damping material of the exhaust silencer. A recuperation inlet of the exhaust pressure conduit is located upstream of the exhaust silencer such that back pressure generated by the exhaust silencer can be utilized to direct air from the exhaust section of the valve towards the recuperation tank.

Preferably, the pneumatic valve comprises a housing and wherein a recuperation channel extends from the exhaust section to a recuperation port arranged on the housing, wherein the recuperation port is connected to the recuperation conduit, and wherein the recuperation channel at least partially extends through the housing. Preferably, the recuperation conduit either extends through the exhaust silencer or is connected to the recuperation port of the housing. Providing a recuperation channel in the housing may facilitate integration of the pneumatic conduit, the pneumatic valve or other parts of the system in the vehicle.

In a preferred embodiment, the recuperative pneumatic system is or comprises a pneumatic brake system. The pneumatic valve preferably is a pneumatic brake valve, particularly preferred a pneumatic brake valve of a service brake circuit of the pneumatic brake system. The pneumatic brake valve may also be a parking brake valve of a parking brake circuit of the pneumatic brake system. In particular, for vehicles that are mainly used in city traffic, forming the service brake circuit as a semi-open circuit is advantageous, since in compared to other traffic situations a high number of service brake maneuvers are executed during an operating hour. The present invention is thus particularly advantageous for vehicles, in particular commercial vehicles such as buses, for urban transport.

In a second aspect, the invention solves the above-mentioned problem by a vehicle comprising a recuperative pneumatic system according to the first aspect of the invention. Preferably, the vehicle is a commercial vehicle, particularly preferred a commercial vehicle for urban transport.

According to a third aspect of the invention, the above-mentioned problem is solved by a pneumatic valve comprising a working port, a control element movable between a working position for providing air at a working pressure to the working port and an exhaust position for discharging pressurized air from working port to an exhaust section, a functional exhaust device connected to the exhaust section of the pneumatic valve for discharging pressurized air from the exhaust section to the environment, characterized in that the pneumatic valve is a semi-open valve comprising two flow paths for discharging air from the exhaust section, wherein a first flow path is an exhaust flow path from the exhaust section to the environment via the functional exhaust device, and wherein the second flow path is a recuperation channel connecting the exhaust section to a recuperation port, wherein the recuperation channel preferably extends through the functional exhaust device and/or through a housing of the pneumatic valve. Preferably, the pneumatic valve comprises a supply port for receiving compressed air at a supply pressure. The pneumatic valve according to the third aspect facilitates establishing a semi-open recuperative vehicle pneumatic system. The pneumatic valve comprises two flow paths for discharging air from the exhaust section that are preferably both open at the same time. The recuperation channel preferably begins upstream of the function exhaust device. Back pressure generated by the functional exhaust device or resulting from the pressure loss in the functional exhaust device respectively may be used for directing air to the recuperation port via the recuperation channel.

The above-mentioned problem is further solved by a pneumatic element, preferably a pneumatic valve, comprising an inlet port for receiving compressed air, an exhaust section for discharging pressurized air, and a functional exhaust device connected to the exhaust section of the pneumatic element for discharging pressurized air from the exhaust section to the environment, characterized in that the pneumatic element is a semi-open element comprising two flow paths for discharging air from the exhaust section, wherein a first flow path is an exhaust flow path from the exhaust section to the environment via the functional exhaust device, and wherein the second flow path is a recuperation channel connecting the exhaust section to a recuperation port, wherein the recuperation channel preferably extends through the functional exhaust device and/or through a housing of the pneumatic element.

It shall be understood that the vehicle according to the second aspect of the invention, the pneumatic valve according to the third aspect of the invention and the recuperative vehicle pneumatic system according to the first aspect of the invention comprise similar and identical embodiments which are in particular described in the dependent claims. In so far, reference is made to the above description of the recuperative vehicle pneumatic system according to the first aspect of the invention.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. "At least one" includes "at least two", "at least three", "at least four" and so forth.

In the accompanying drawings:
- Fig. 1: illustrates an embodiment of a semi-open vehicle pneumatic system having multiple pneumatic valves;
- Fig. 2a: illustrates a first embodiment of a pneumatic valve of the semi-open vehicle pneumatic system; and
- Fig. 2b: illustrates a second embodiment of a pneumatic valve of the semi-open vehicle pneumatic system.

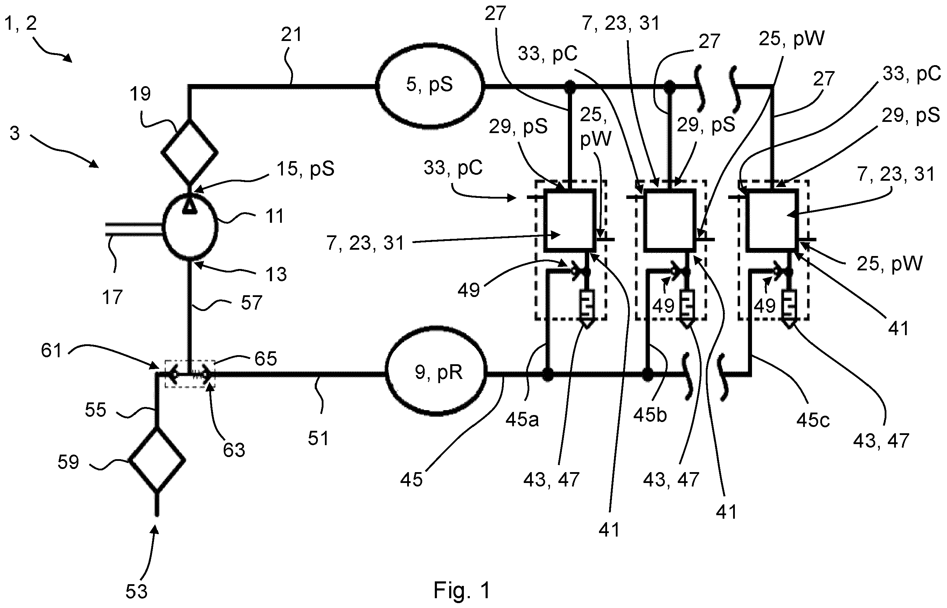

A recuperative vehicle pneumatic system 1 shown in Fig. 1 comprises a compressed air supply unit 3, a compressed air reservoir 5, multiple pneumatic valves 7 and a recuperation tank 9. The vehicle system 1 may only comprise 1 pneumatic valve.

An air compressor 11 of the compressed air supply unit 3 is configured to suck in air at a suction side 13 and to provide compressed air at a pressure side 15. The compressor 11 preferably is a piston compressor, a screw compressor or a turbo compressor, in particular a radial turbo compressor. A drive device (not shown in Fig. 1) drives the compressor 11 via a drive shaft 17. Preferably, the drive device is an electric motor. When driven by the drive device, the compressor 11 sucks in air and provides compressed air at supply pressure pS to the pressure side 15. The pressure side 15 of the compressor is connected to a dryer 19 configured to remove moisture from the compressed air.

The compressed air reservoir 5 is connected to the dryer 19 via a primary supply line 21. The compressed air reservoir 5 stores the compressed air provided at the supply pressure pS for further use in the pneumatic valves 7. It shall be understood that a pressure level at the pressure side 15 may be different to the pressure level in the compressed air reservoir 5 due to pressure losses in the primary supply line 21 and the dryer 19. However, for the sake of simplicity, it is assumed that compressed air at the supply pressure pS is stored in the compressed air reservoir 5.

In the embodiment of Fig. 1, the recuperative vehicle pneumatic system 1 is a pneumatic brake system 2. The pneumatic valves 7 of the pneumatic brake system 2 are pneumatic brake valves 23 that provide compressed air to brake cylinders of the brake system 2 not shown in the figures. In particular, the pneumatic valves 7 each comprise a working port 25 for supplying pressurized air at a working pressure pW to the brake cylinders connected thereto. In order to provide the working pressure pW the pneumatic valves 7 receive compressed air at the supply pressure pS from the compressed air reservoir 5. Secondary supply lines 27 connect supply ports 29 of the pneumatic valves 7 to the compressed air reservoir 5. Again, for the sake of simplicity, pressure losses in the secondary supply lines 27 are neglected. The pneumatic valves 7 thus receive compressed air at the supply pressure pS at their respective supply ports 29.

In the present embodiment of the recuperative vehicle pneumatic system 1, the pneumatic valves 7 are formed as relay valves 31 each having a control port 33 for receiving pressurized air at a control pressure pC. The pneumatic valves 7 are configured to supply a working pressure pW to their respective working port 25 that corresponds to the control pressure pC received at their respective control port 33. Preferably, the pneumatic valves 7 provide a working pressure pW to their respective working ports 25 that is substantially identical to the control pressure pC received at their respective control port 33.

The control pressure pC may be provided to the control ports 33 by various units or devices. For example, the recuperative vehicle pneumatic system 1 of Fig. 1 being a pneumatic brake system 2 may comprise a foot brake valve (not shown) connected to one or more of the control ports 33 for providing the control pressure pC.

In order to initiate a deceleration of the vehicle comprising the recuperative vehicle pneumatic system 1, a driver of the vehicle pushes the foot brake valve and thereby provides control pressure pC to one or more of the control ports 33. The pneumatic brake valves 23 receiving the control pressure pC at their respective control ports 23 provide a corresponding working pressure pC to the brake cylinders connected to their respective working ports 25. Once supplied with compressed air at working pressure pW, the brake cylinders apply service brakes for decelerating the vehicle.

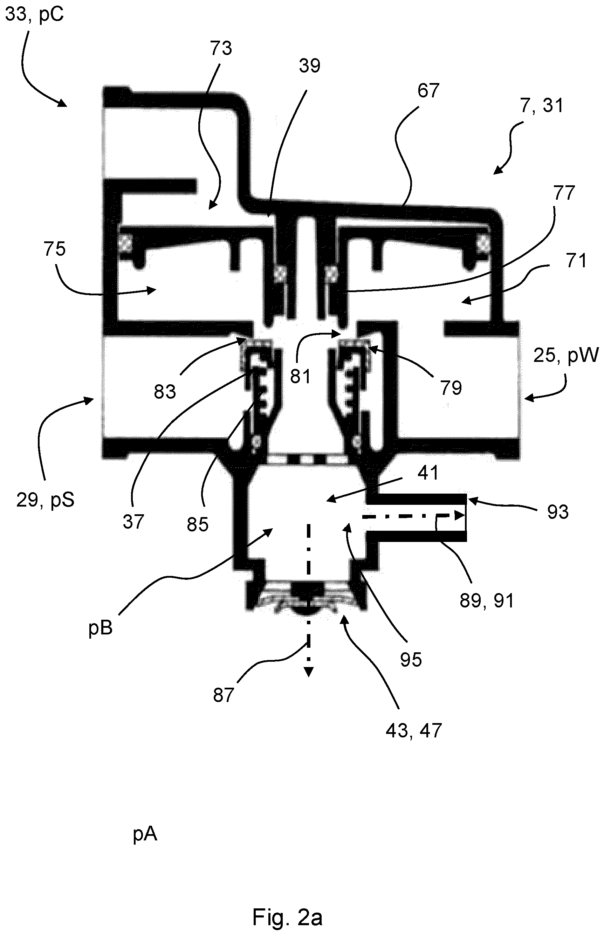

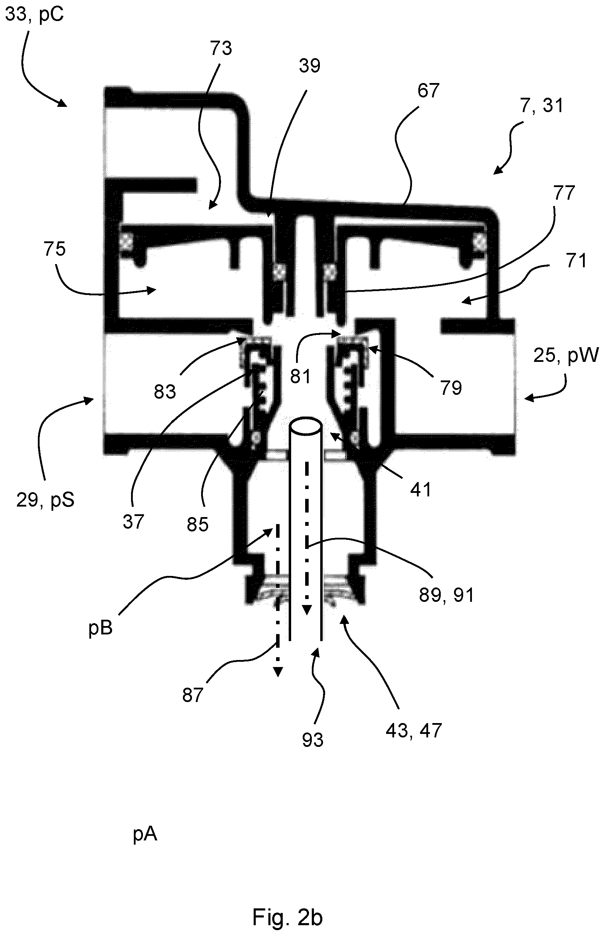

Once the brake operation is finished, the driver of the vehicle removes the pressure on the foot brake valve such that the control pressure pC is released from the one or more control ports 33 it was supplied to. A control element 35 of the pneumatic valve 7 is configured to move from a working position 37 to an exhaust position 39 (see Fig. 2a and 2b). During supply of the working pressure pW to the working port 25, the control element 35 is in the working position 37. When the control pressure pC is released from the control port 33, the control element 35 moves to the exhaust position 39 such that pressurized air may be discharged from the working port 25 towards an exhaust section 41 of the respective pneumatic valve 7. Pressurized air is then discharged from the brake cylinders via the pneumatic valve 7, in particular via the working port 25 and the exhaust section 41 for releasing the operating brakes of the vehicle.

In an open vehicle pneumatic system, compressed air is entirely discharged to the environment via a functional exhaust device 43. As the pressurized air generally still has a pressure level above the ambient pressure pA, discharge of the pressurized air to the environment leads to an energy loss from the system. For the next working cycle, air at atmospheric pressure needs to be drawn into the system and needs to be brought all the way up to the supply pressure, requiring lots of energy. Moreover, if a back pressure pB in the exhaust section 41 is high enough, the released flow of pressurized air reaches sonic speed in the narrowest cross section of the flow path towards the environment. This results in excessive noise, which is particularly undesirable at low vehicle speeds.

The recuperative vehicle pneumatic system 1 shown in Fig. 1 additionally comprises a recuperation conduit 45 connecting the exhaust sections 41 of the respective pneumatic valves 7 to the recuperation tank 9. Pressurized air from the working ports 25 may be recuperated to the recuperation tank 9 via the recuperation conduit 45. For each of the pneumatic valves 7, the recuperation conduit 45 extends into the exhaust section 41 of the respective valve 7. An inlet of the recuperation conduit 45 is located upstream of the functional exhaust device 43 of the respective pneumatic valve 7.

In the shown embodiment, the functional exhaust device 43 of each respective pneumatic valve 7 is formed by an exhaust silencer 47 directly fixed to the respective exhaust section 41 of the pneumatic valve. The exhaust silencer 47 of a pneumatic valve 7 dampens noise when pressurized air is released to the environment from this pneumatic valve 7. The exhaust silencer 47 provides a flow resistance for the airflow from the respective exhaust section 41 to the environment. This flow resistance results in the back pressure pB in the exhaust section 41 being higher than an ambient pressure pA of the environment. The back pressure pB also creates a pressure differential between the exhaust section 41 of the pneumatic valve 7 and the recuperation tank 9 connected thereto via the recuperation conduit 45. If the back pressure pB is high enough, at least part of the compressed air received in the exhaust section 41 from the working port 25 flows from the exhaust section 41 towards the recuperation tank 9 instead of the environment. In commercial vehicles, the back pressure pB may reach pressure levels of 6 bar or even higher, such that a lot of energy may be saved when compressed air is directed to the recuperation tank 9 instead of the environment.

In the present embodiment, a fluid connection between the exhaust section 41 and the working port 33 is blocked, as long as the control element 35 of the pneumatic valve 7 is in the working position 37. In this case, the back pressure pB in the exhaust section 41 substantially equals the ambient pressure pA, since little to no airflow is established between the exhaust section 41 and the environment. In the embodiment of Fig. 1, the control pressure conduit 45 comprises a respective arm 45a, 45b, 45c for each pneumatic valve 7 of the recuperative vehicle pneumatic system 1. The arms 45a, 45b, 45c join into a main section of the control pressure conduit 45, which then opens into the recuperation tank 9. To prevent loss of recuperated compressed air from the recuperation tank 9 to the environment through the exhaust silencers 41, in particular when the control element 35 of the pneumatic valve is in the working position 37, the arms 45a, 45b, 45c of the control pressure conduits 45 each comprise a tank protection valve 49.

The tank protection valves 49 are check-valves that allow airflow from the respective exhaust sections 41 of the pneumatic valves 7 towards the recuperation tank 9 but not in the opposite direction. Once the back pressure pB in the exhaust section 21 is higher than a recuperative pressure pR in the recuperation tank 9, pressurized air is able to flow from the exhaust section 21 to the recuperation tank 9. It shall be noted that under real conditions, pressure losses in the recuperation conduit 45 and the tank protection valves 49 need to be taken into account. Hence, in reality a fluid connection between the pneumatic valve 7 and the recuperation tank 9 is only established when the back pressure pB exceeds the recuperative pressure pR by at least the pressure loss caused by the tank protection valve(s) 49 and the recuperation conduit 45 or if a pressure differential driving the air from the exhaust section 41 to the recuperation tank 9 is positive respectively.

In the semi-open recuperative vehicle pneumatic system 1 of Fig. 1, air may flow from the exhaust section 41 as well as the environment. Which direction the flow of compressed air takes depends on the back pressure pB and specific pressure losses in the recuperation conduit 45 and the functional exhaust device 43. However, in the present embodiment and preferably no valve or other element directing the air flow needs to be actively actuated. In particular, no switch valve needs to be operated to shut of the exhaust section 41 from the environment and/or to establish a fluid connection between the exhaust section 41 and the recuperation tank 45. In the present embodiment and preferably, the semi-open recuperative vehicle pneumatic system 1 functions as a self-regulating or passive system.

The recuperation tank 9 is connected to the suction side 13 of the compressor 11 via a first suction line 51. The suction side 13 of the compressor 11 is further connected to an air inlet 53 of the vehicle pneumatic system 1 via a second suction line 55. When operated, the compressor 11 may thus suck in air from the environment via the air inlet 53 or from the recuperation tank 9. The first suction line 51 and the second suction line 55 are connected to a main suction line 57 leading to the suction side 13. To prevent ingress of dust or other contaminants from the environment, the recuperative vehicle pneumatic system 1 comprises a suction filter unit 59 in the second suction line 55.

An inlet protection valve 61 is provided at the connection between the first suction line 51 and the second suction line 55. The inlet protection valve 61 prevents airflow from the recuperation tank 9 to the air inlet 53 of the recuperative vehicle pneumatic system 1, in particular when the compressor 11 is not running. The inlet protection valve 61 is preferably formed as a check-valve allowing airflow from the inlet 53 towards the suction side 13 of the compressor 11 and preventing airflow in the opposite direction.

The recuperative vehicle pneumatic system 1 further comprises an intermediate protection valve 63. The intermediate protection valve 63 prevents airflow from the suction side 13 of the compressor 11 to the recuperation tank 9. This is particularly helpful to prevent airflow from the supply reservoir 5 towards the recuperation tank 9 if the compressor 11 is not driven by the drive unit. The intermediate protection valve 63 is preferably also formed as a check valve.

In the present embodiment of the recuperative pneumatic vehicle system 1, the inlet protection valve 61 and the intermediate protection valve 63 are formed as a double-acting check valve 65. The double-acting check valve 65 either connects the air inlet 53 or the recuperation tank 9 to the suction side 13 of the compressor 11 but prevents fluid connection between the air inlet 53 and the suction side 13 and simultaneous fluid connection between the recuperation tank 9 and the suction side 13. Preferably, an additional check valve may be provided between the double-acting check valve 65 and the suction side 13 of the compressor and/or the pressure side 15 of the compressor and the supply reservoir 5.

A crack pressure of the inlet protection valve 61 is smaller than a corresponding crack pressure of the intermediate protection valve 63 such that air is sucked into the compressor 11 via the air inlet 53 in case the recuperative pressure pR lies below a pressure threshold defined by the respective crack pressures of the inlet protection valve 61 and the intermediate protection valve 63. If, for example, the recuperative pressure pR in the recuperation tank 9 substantially equals the ambient pressure pA, the inlet protection valve 61 opens and the intermediate protection valve 63 is closed such that the compressor 11 sucks in air via the air inlet 53. This prevents the compressor 11 from drawing in air via the first suction line 51, the recuperation tank 9, the recuperation conduit 45 and the functional exhaust device 43 when the recuperation tank 9 is substantially empty. This prevents dust or other contaminates from being drawn into the recuperative vehicle pneumatic system via the functional exhaust device.

Figs. 2a and 2b show two embodiments of a pneumatic valve 7 connected to an exhaust silencer 47. With the exception of the connection of the recuperation conduit 45 to the exhaust section 21, the pneumatic valves 7 of Figs. 2a and 2b are identical such that the described functionality of the pneumatic valves 7 is substantially identical.

The pneumatic valve 7 comprises a housing 67. The control port 33, working port 25 and supply port 29 of the pneumatic valve 7 are formed on the housing 67. In both embodiments, the pneumatic valve 7 is a relay valve 31 comprising a relay piston 69 forming the control element 35. The relay piston 69 is received in a relay cylinder 71 and divides the relay cylinder 71 in a control section 73 and working section 75. The control section 73 is directly connected to the control port 33 such that the pressure level in the control section 73 equals the control pressure pC provided to the control port 33.

Figs. 2a and 2b show the control element 35 in the exhaust position 39. In the exhaust position 39, a relay piston shaft 77 of the relay piston 69 is spaced apart from a valve member 79 of the relay valve 31. A gap 81 between the relay piston shaft 77 and the valve member 79 establishes a fluid connection between the working port 25 and the exhaust section 41 of the pneumatic valve 7. Pressurized air may thus flow from the working port 25 through the gap 81 to the exhaust section 41. The working port 25 is vented. In this case, the pressure level in the working section 75 of the relay cylinder 71 equals the working pressure pW. Once, the brake cylinder connected to the working port 25 has been completely vented, the pressure in the working section 75 substantially equals the ambient pressure pA.

When the relay piston 69 is in the exhaust position 39, the valve member 79 is pressed against a valve seat 83 by a return spring 85. The valve member 79 thereby blocks a fluid connection between the supply port 29 and the working port 25 as well as a fluid connection between the supply port 29 and the exhaust section 41.

To initiate a brake maneuver, a control pressure pC higher than the ambient pressure pA is supplied to the control chamber 73 via the control port 33. A pressure differential between the working section 75 and the control section 73 is established which results in a pressure force on the relay piston 69. This pressure force moves the relay piston 69 from the exhaust position 39 towards the working position 37 (downwards with respect to Figs. 2a and 2b). The relay piston shaft 77 advances towards the working position 37 until it abuts the valve member 79 and closes the gap 81. This interrupts the fluid connection between the working port 25 and the exhaust section 41. Further movement of the relay piston 69 towards the working position 37, which in this embodiment is a fully open position of the relay valve 31, moves the valve member 79 away from the valve seat 83. Through this, a fluid connection is established between the supply port 29 and the working port 25 such that pressurized air is supplied to the brake cylinder connected to the working port 25. The pressure level of the working pressure pW depends on the size of a gap formed between the valve member 79 and the valve seat 83. If the control pressure pC is large enough, the relay piston shaft 77 moves the valve member 79 all the way to the working position 37 such that the working pressure pW reaches its maximum. In the shown embodiment, the working pressure pW substantially equals the control pressure pC.

When the brake operation is completed, the control pressure pC is released from the control section 73 of the relay cylinder 71. The working pressure pC then exceeds the pressure level in the control section 73 such that the relay piston is moved back to the exhaust position. The valve member 79 is pushed back against the valve seat 83 by the return spring 85. Once the relay piston shaft 77 lifts off of the valve member 79, the gap 81 opens up again and the fluid connection between the working port 25 and the exhaust section 41 is again established. Since there is still a significant working pressure pW in the brake cylinder connected to the working port 25, an air flow is initiated from the working port 25 through the gap 81 to the exhaust section 41.

In both embodiments shown in Figs. 2a and 2b the pressurized air received from the working port 25can be discharged from the exhaust section 41 via two possible channels. The air may be discharged to the environment along a first flow path 87 from the exhaust section 41 to the environment via the functional exhaust device 43 or along a second flow path 89 being a recuperation channel 91 connecting the exhaust section 41 to the recuperation conduit 45.

In the embodiment shown in Fig. 2a, the pneumatic valve 7 further comprises a recuperation port 93 arranged on the housing 67. The recuperation port 93 is in fluid connection to the exhaust section 41 via the recuperation channel 91 or second flow path 89 respectively extending through the housing 67. The recuperation conduit 45 of the recuperative vehicle pneumatic system 1 is connected to the recuperation port 93. In the embodiment depicted in Fig. 2a, the recuperation port 93 is an extension of the housing 67 that allows a tube forming the recuperation conduit 45 to be clamped thereto.

In the second embodiment of the pneumatic valve 7 depicted in Fig. 2b, the recuperation channel extends through the exhaust silencer 47. In the second embodiment, a tube or pipe extending through the exhausts silencer 47 forms the recuperation channel 91. The recuperation conduit 45 can be connected to this tube forming the recuperation channel 91 at the recuperation port 93. However, the recuperation conduit 45 and the recuperation channel 91 may also be integrally formed, preferably be a continuous pipe or tube. In this alternative embodiment, the recuperation port 93 may thus be an imaginary section in the recuperation conduit 45. Since the recuperation channel 91 extends through the functional exhaust device 43, no modifications on the housing 67 or the internal components of the pneumatic valve 7 are necessary to establish the semi-open recuperative vehicle pneumatic system 1. For example, the recuperation conduit 45 may be inserted into the exhaust section 41 through a hole cut into the exhaust silencer 43. However, the design shown in Fig. 2a may be more robust and may be more compact.

In both embodiments of the pneumatic valve 7, an inlet 95 of the recuperation channel 91 or the recuperation conduit 45 respectively is arranged upstream of the functional exhaust device 43 when air flows from the working port 25 towards the exhaust section 41. A pressure drop generated in the functional exhaust device 43 therefore has no significant influence on the air flow in the recuperation conduit 45 except that the back pressure pB is utilized for directing the pressurized air either to the recuperation tank 9. When the tank protection valves 49 are open, the exhaust sections 41 of the respective pneumatic valves 7 are simultaneously connected to the recuperation tank 9 as well as the environment.

### List of reference signs (Part of the description)

- 1: recuperative vehicle pneumatic system
- 2: pneumatic brake system
- 3: compressed air supply unit
- 5: compressed air reservoir
- 7: pneumatic valve
- 9: recuperation tank
- 11: air compressor
- 13: suction side
- 15: pressure side
- 17: drive shaft
- 19: dryer
- 21: primary supply line
- 23: pneumatic brake valves
- 25: working port
- 27: secondary supply line
- 29: supply port
- 31: relay valve
- 33: control port
- 35: control element
- 37: working position
- 39: exhaust position
- 41: exhaust section
- 43: functional exhaust device
- 45: recuperation conduit
- 45a, 45b, 45c: arms of the recuperation conduit
- 47: exhaust silencer
- 49: tank protection valve
- 51: first suction line
- 53: air inlet
- 55: second suction line
- 57: main suction line
- 59: suction filter unit
- 61: inlet protection valve
- 63: intermediate protection valve
- 65: double-acting check valve
- 67: housing of the pneumatic valve
- 69: relay piston
- 71: relay cylinder
- 73: control section
- 75: working section
- 77: relay piston shaft
- 79: valve member
- 81: gap
- 83: valve seat
- 85: return spring
- 87: first flow path
- 89: second flow path
- 91: recuperation channel
- 93: recuperation port
- 95: inlet of recuperation channel
- pA: ambient pressure
- pB: back pressure
- pC: control pressure
- pS: supply pressure
- pW: working pressure

## Claims

1. A recuperative vehicle pneumatic system (1), the system (1) comprising
a compressed air supply unit (3) having a compressor (11) configured to suck in air at a suction side (13) and to provide air at a supply pressure (pS) at a pressure side (15),
at least one pneumatic valve (7) having
a supply port (29) for receiving compressed air at the supply pressure (pS),
a working port (25),
an exhaust section (41), and
a control element (35) movable between a working position (37) for providing air at a working pressure (pW) to the working port (25) and an exhaust position (39) for discharging pressurized air from the working port (25) to the exhaust section (41), and
a functional exhaust device (43) connected to the exhaust section (41) of the pneumatic valve (7) for discharging pressurized air from the exhaust section (41) to the environment
**characterized in that**
the recuperative pneumatic system (1) is a semi-open system further comprising
a recuperation tank (9) connected to the suction side (13) of the compressor (11) and
a recuperation conduit (45) connecting the exhaust section (41) of the pneumatic valve (7) to the recuperation tank (9).

2. The recuperative vehicle pneumatic system (1) according to claim 1, wherein the recuperative pneumatic system (1) is configured such that the exhaust section (41) of the pneumatic valve (7) is in fluid connection to the recuperation tank (9) as well as the environment via the functional exhaust device (43) when a back pressure (pB) in the exhaust section (41) is larger or equal to a recuperative pressure (pR) in the recuperation tank (9).

3. The recuperative vehicle pneumatic system (1) according to claim 1 or 2, wherein a tank protection valve (49) is arranged in the recuperation conduit (45), the tank protection valve (49) configured to prevent back flow of pressurized air from the recuperation tank (9) to the exhaust section (41).

4. The recuperative vehicle pneumatic system (1) according to any of claims 1 to 3, wherein the pneumatic valve (7) is a relay valve (31) having a control port (33) for receiving control pressure (pC) and a relay piston (69) forming the control element (35), wherein the relay piston (69) is movable between the working position (37) and the exhaust position (39) dependent on the control pressure (pC).

5. The recuperative vehicle pneumatic system (1) according to any of claims 1 to 4, further comprising a suction filter unit (59), wherein the suction filter unit (59) connects the suction side (13) of the compressor (11) to an air inlet (53) of the recuperative pneumatic system (1).

6. The recuperative vehicle pneumatic system (1) according to claim 5, further comprising a inlet protection valve (61) arranged between the suction side (13) and the air inlet (53), wherein the inlet protection valve (61) prevents air flow from the recuperation tank (9) to the air inlet (53).

7. The recuperative vehicle pneumatic system (1) according to any of claims 1 to 6, further comprising an intermediate protection valve (63) arranged between the recuperation tank (9) and the suction side (13) of the compressor (11), wherein the intermediate protection valve (63) prevents air flow from the suction side (13) to the recuperation tank (9).

8. The recuperative vehicle pneumatic system (1) according to claim 6 and 7,
wherein a crack pressure of the inlet protection valve (61) is smaller than a corresponding crack pressure of the intermediate protection valve (63).

9. The recuperative vehicle pneumatic system (1) according to claim 8, wherein the inlet protection valve (61) and the intermediate protection valve (63) are formed as a double-acting check valve (65) either connecting the recuperation tank (9) or the air inlet (53) to the suction side (13) of the compressor (11).

10. The recuperative vehicle pneumatic system (1) according to any of claims 1 to 9, wherein the functional exhaust device (43) comprises an exhaust silencer (47).

11. The recuperative vehicle pneumatic system (1) according to claim 9, wherein the recuperation conduit (45) extends through the exhaust silencer (47).

12. The recuperative vehicle pneumatic system (1) according to claim 9, wherein the pneumatic valve (7) comprises a housing (67) and wherein a recuperation channel (91) extends from the exhaust section (41) to a recuperation port (93) arranged on the housing (67), wherein the recuperation port (93) is connected to the recuperation conduit (45), and wherein the recuperation channel (91) at least partially extends through the housing (67).

13. The recuperative vehicle pneumatic system (1) according any of claims 1 to 12, wherein the recuperative pneumatic system (1) is or comprises a pneumatic brake system (2), and, wherein the pneumatic valve (7) is a pneumatic brake valve (23), preferably a pneumatic brake valve (23) of a service brake circuit of the pneumatic brake system (2).

14. A vehicle comprising a recuperative vehicle pneumatic system (1) according to any of claims 1 to 13.

15. A pneumatic valve (7) comprising
a working port (25),
a control element (35) movable between a working position (37) for providing air at a working pressure (pW) to the working port (25) and an exhaust position (39) for discharging pressurized air from working port (25) to an exhaust section (41),
a functional exhaust device (43) connected to the exhaust section (41) of the pneumatic valve (7) for discharging pressurized air from the exhaust section (41) to the environment,
**characterized in that**
the pneumatic valve (7) is a semi-open valve comprising two flow paths for discharging air from the exhaust section (41), wherein a first flow path (87) is an exhaust flow path from the exhaust section (41) to the environment via the functional exhaust device (43), and wherein the second flow path (89) is a recuperation channel (91) connecting the exhaust section (41) to a recuperation port (93),
wherein the recuperation channel (91) preferably extends through the functional exhaust device (43) and/or through a housing (67) of the pneumatic valve (7).
